# EUROPEAN PATENT APPLICATION

(11) **EP 2 551 783 A1**
(43) Date of publication of application: **30.01.2013**
(21) Application number: 12177976.3
(22) Date of filing: 26.07.2012
(51) Int. Cl.: G06F 17/30

(54) **System and method for information lifecycle management of investigation cases**

(30) Priority: 27.07.2011 IL 21431211
(71) Applicant: Verint Systems Limited, Pituach (IL)
(72) Inventor: Wilf, Yuval, Petach-Tiqwa (IL)
(74) Representative: Bibby, William Mark

(57) **Abstract**

Various agencies, such as law enforcement and intelligence agencies, deploy monitoring centers that monitor communication networks and analyze the monitored communication. One possible way to reduce storage cost is to apply Information Lifecycle Management (ILM) techniques, which store the content to multiple storage tiers having different performance levels. The monitoring center processes the various items of content in the context of investigation cases. given investigation case may be assigned a certain status, e.g., active or closed. The monitoring center comprises an ILM server that assigns content items to storage tiers based on the investigation cases with which the content items are associated. The ILM server may analyze the state of a given investigation case, and selects an ILM policy based on the state of the case. The ILM policy specifies the storage tier (or tiers) to be used for storing items of data associated with the case.

## Description

### FIELD OF THE DISCLOSURE

The present disclosure relates generally to data management, and particularly to methods and systems for information lifecycle management.

### BACKGROUND OF THE DISCLOSURE

Various data management systems use Information Lifecycle Management (ILM) techniques for administrating the storage of data over time. Example ILM techniques are described in U.S. Patent Application Publication 2006/0004847, whose disclosure is incorporated herein by reference.

### SUMMARY OF THE DISCLOSURE

An embodiment that is described herein provides a method for Information Lifecycle Management (ILM). The method includes analyzing a state of an investigation case and selecting, based on the analyzed state, an ILM policy for applying to items of data associated with the investigation case. The items of data are stored in a storage system having multiple storage tiers having different, respective performance levels, in accordance with the ILM policy.

In some embodiments, selecting the ILM policy includes choosing a respective storage tier for storing each item of data. In an embodiment, selecting the ILM policy includes identifying an activity status of the investigation case, and choosing the storage tier depending on the activity status. In a disclosed embodiment, the performance levels of the multiple storage tiers include different, respective access times.

In some embodiments, the items include content that is derived from communication sessions conducted over a communication network and metadata associated with the content. In an embodiment, the metadata includes references to a current storage location of the associated content in the storage system. In another embodiment, the items include additional items of data from an external source separate from the communication network.

In yet another embodiment, storing the items in accordance with the ILM policy includes storing the items in a first storage tier having a first performance level when the investigation case is active, and storing the items in a second storage tier having a second performance level, lower than the first performance level, when the investigation case is inactive. In still another embodiment, storing the items in accordance with the ILM policy includes detecting a change in the state of the investigation case, and moving the items from a first storage tier to a second storage tier in response to the change. In a disclosed embodiment, the items include content and metadata associated with the content, and moving the items includes moving only the content and not the metadata of the items, and updating the metadata of the items to reflect a current storage location of the items in the second storage tier.

In an embodiment, the investigation case is one of multiple investigation cases that are assigned respective priorities, and storing the items in accordance with the ILM policy includes choosing a storage tier for storing the items depending on a priority assigned to the investigation case. In another embodiment, selecting the ILM policy includes choosing a storage tier for storing the items depending on a parent case or on a sub-case of the investigation case. In yet another embodiment, selecting the ILM policy includes selecting a storage tier for storing the items based on timing profiles according to which the data items associated with the investigation case were accessed.

In some embodiments, storing the items in accordance with the ILM policy includes copying content of all the items associated with the investigation case from a first storage location to a second storage location in a single transaction, updating metadata associated with the items following the transaction to indicate the second storage location, and, after updating the metadata, deleting the content from the first storage location. In an embodiment, the method includes rolling back the transaction upon failing to successfully complete the transaction or to update the metadata.

There is additionally provided, in accordance with an embodiment that is described herein, apparatus for Information Lifecycle Management (ILM) including a storage system and a processor. The storage system includes multiple storage tiers having different, respective performance levels. The processor is configured to analyze a state of an investigation case, to select, based on the analyzed state, an ILM policy for applying to items of data that are associated with the investigation case, and to store the items of data in the storage tiers of the storage system in accordance with the ILM policy.

The present disclosure will be more fully understood from the following detailed description of the embodiments thereof, taken together with the drawings in which:

### BRIEF DESCRIPTION OF THE DRAWINGS

Fig. 1 is a block diagram that schematically illustrates a monitoring center, in accordance with an embodiment of the present disclosure;
Fig. 2 is a block diagram that schematically illustrates an Information Lifecycle Management (ILM) server in a monitoring center, in accordance with an embodiment of the present disclosure; and
Fig. 3 is a flow chart that schematically illustrates a method for ILM, in accordance with an embodiment of the present disclosure.

### DETAILED DESCRIPTION OF EMBODIMENTS

### OVERVIEW

Various agencies, such as law enforcement and intelligence agencies, deploy monitoring centers that monitor communication networks and analyze the monitored communication. A monitoring center typically comprises a large storage system, which stores raw content of intercepted communication sessions as well as analysis products. In many practical applications, a large volume of content has to be stored for long periods of time - An example monitoring center may be required to store several Terabytes of content for several years. The cost of storage devices that meet such requirements may be prohibitive.

One possible way to reduce storage cost is to apply Information Lifecycle Management (ILM) techniques, which store the content to multiple storage tiers having different performance levels. For example, an ILM scheme may store some content on lower-cost but slower storage devices, and other content on faster but higher-cost storage devices. Each type of storage device, which is characterized by a certain cost/access-time trade-off, is referred to herein as a storage tier. In an example configuration, the storage system comprises three storage tiers: An on-line tier comprising Fibre-Channel (FC) disks, a mid-term storage tier comprising Serial Advanced Technology Attachment (SATA) disks, and an archive tier comprising detachable storage media.

Embodiments that are described hereinbelow provide improved methods and systems for ILM. In the disclosed techniques, the monitoring center processes the various items of content in the context of investigation cases. In other words, each item of content is associated with one or more investigation cases. A given investigation case may be assigned a certain status, e.g., active or closed. The monitoring center comprises an ILM server that assigns content items to storage tiers based on the investigation cases with which the content items are associated. Typically, content that is associated with active investigation cases will be stored on faster storage devices, and content that is associated with closed investigation cases will be stored on slower storage devices.

In other words, the ILM server analyzes the state of a given investigation case, and selects an ILM policy based on the state of the case. The ILM policy specifies the storage tier (or tiers) to be used for storing items of data associated with the case. The ILM server stores the items in accordance with the selected ILM policy. In a typical embodiment, the items comprise content and associated metadata. Typically, only the content is moved from one storage tier to another. The metadata comprises references to the current storage locations of the content in the storage system, and is updated whenever content is moved between storage tiers.

A naive ILM solution would be to select a storage tier for a given content item based on the last time this item was accessed, such that only recently-accessed items are stored on fast but expensive storage media. Such a naïve solution, however, does not perform well in the context of investigation cases.

For example, an active investigation case often relates to multiple content items, some of which are old and accessed rarely, while others are new and accessed recently. Similarly, a closed investigation case may relate to a mixture of new and old content items. The disclosed techniques can make all the content items related to an active case readily accessible, regardless of their individual access history. As a result, access time to content items of active cases is reduced. When an investigation case is closed, its content items can be moved to slow, low-cost storage, even though some of the items may be new and recently-accessed. Thus, fast memory storage is used only when actually needed, and system cost is reduced.

### SYSTEM DESCRIPTION

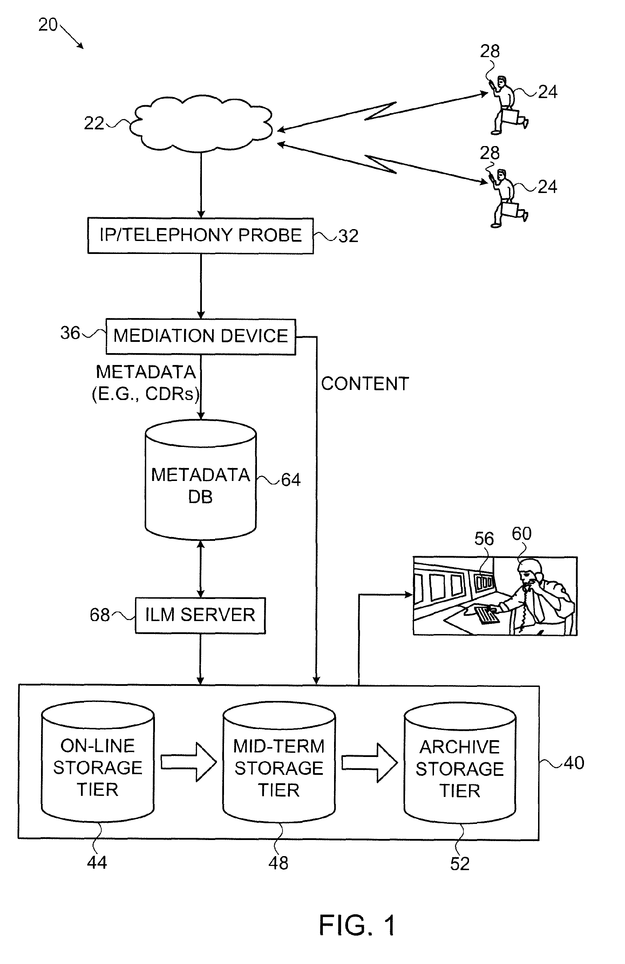

Fig. 1 is a block diagram that schematically illustrates a monitoring center 20, in accordance with an embodiment of the present disclosure. Monitoring center 20 is connected to a communication network 22 and monitors communication of users 24 who operate communication terminals 28 over the network. Monitoring centers of this sort may be used, for example, for tracking suspect users, for intelligence gathering or for any other suitable application. The system may be deployed, for example, by intelligence or government agencies, by law enforcement or public safety bodies, or by any other suitable party.

Network 22 may comprise, for example, a wireless (e.g., cellular) network such as a Global System for Mobile communications (GSM) network, a Universal Mobile Telecommunications System (UMTS) network, a Wireless Local Area Network (WLAN - also referred to as Wi-Fi) or any other suitable type of wireless communication network. In alternative embodiments, network 22 may comprise a wireline network such as a Public Switched Telephone Network (PSTN), an Internet Protocol (IP) network such as the Internet or any other suitable type of wireleine network.

Terminals 28 may comprise, for example, fixed or mobile phones, communication-enabled mobile computers or Personal Digital Assistants (PDAs), or any other suitable type of device having communication capabilities. Terminals 28 may communicate over network 22 in various ways. The embodiments described below refer mainly to telephone calls, but the disclosed techniques are applicable to various other kinds of communication interaction, such as e-mail, chat, instant messaging and Short Message Service (SMS).

One or more probes 32 intercept the communication from network 22. The type of probe may vary, for example, depending on the type of network and the means for connecting to the network. In the present example, probe 32 comprises a passive IP or telephony probe. Additionally or alternatively, probes 32 may intercept the communication using active methods, e.g., using commands in the network elements of network 22 to duplicate the communication of certain terminals 28 and send it to the monitoring center.

A mediation device 36 separates each intercepted communication session into content and metadata. The content may comprise, for example, recorded voice, text, images, IP traffic or any other type of content exchanged between users 24. The metadata of a given communication session may comprise any suitable parameters that are descriptive of the session. In the present example, the communication sessions comprise telephone calls and the metadata comprises Call Data Records (CDRs).

The content of the intercepted communication is stored in a storage system 40. In the present context, the term "content" is used to cover both raw content that is extracted from the intercepted communication, as well as analysis products that are produced based on the extracted content. Both types of content are typically stored in system 40, and both types can be stored using the disclosed techniques.

In some embodiments, storage system 40 stores additional information relating to the intercepted content, such as transcriptions of voice content and/or annotations written by analysts. Information of this sort may change along the life-cycle of the case. For example, a month after a call was recorded and transcribed, an analyst may discover the meaning of a certain code word used in that call and add this information to the annotations stored in system 40.

In some embodiments, the monitoring center may receive additional information from other sources other than network 22, and relate this information to one or more investigation cases. Such information may comprise, for example, historical CDRs from service providers, financial transactions from banks or credit card companies, or any other suitable information type. Information from external sources may comprise content - e.g., e-mail messages from mail server archives. In these embodiments, information of this sort is also regarded herein as content and/or metadata as appropriate, and the ILM techniques described herein are applied to them based on their association with investigation cases.

System 40 comprises multiple storage tiers, such that each tier comprises storage devices that are characterized by a certain access time. Typically, faster storage devices have higher cost, and *vice versa.* The multi-tier configuration enables the system to select the appropriate cost/access-time trade-off for each content item, while maintaining a manageable system cost. As will be explained below, each item of content is associated with one or more investigation cases, and the selection of storage tier depends on this association.

In the embodiment of Fig. 1, storage system 40 comprises an on-line storage tier 44, a mid-term storage tier 48, and an archive storage tier 52. On-line storage tier 44 has the fastest but most expensive storage devices among the storage tiers. In an example embodiment, tier 44 comprises Fibre-Channel (FC) disks. Mid-term storage tier 48 may comprise slower and lower-cost storage devices, such as Serial Advanced Technology Attachment (SATA) disks.

Archive storage tier 52 comprises even slower storage devices. In the present example, the archive storage tier comprises detachable storage devices, such as detachable disk or tape drives, which are not permanently connected to the monitoring center. In some embodiments, archive storage tier 52 comprises storage media that can be written once but read multiple times, sometimes referred to as Write Once Read Many (WORM) media As another example, archive storage tier 52 may comprise optical storage devices such as CD-ROM or DVD.. Additionally or alternatively, the archive storage tier may comprise storage media that can be written and read multiple times, sometimes referred to as Write Many Read Many (WMRM) media.

In alternative embodiments, system 40 may comprise any suitable number of storage tiers, each having any suitable type of storage devices. Any suitable storage media can be used for implementing the storage devices, such as solid-state memory, or magnetic disk or tape.

Monitoring center 20 comprises a metadata database (DB) 64, which holds the metadata of the intercepted communication sessions. The metadata stored in DB 64 may comprise, for example, transcriptions and annotations relating to the intercepted content and Call Data Records (CDRs). In addition, DB 64 holds references (e.g., pointers or paths) that indicate the current storage locations of the raw content in storage system 40. The references to the raw content storage locations are typically maintained transparently of the actual physical locations of the content in system 40.

Monitoring center 20 comprises an Information Lifecycle Management (ILM) server 68, which controls the storage of content in system 40. In particular, the ILM server decides in which storage tier to store each content item. As conditions change, the ILM server may move content items from one storage tier to another. In some embodiments, ILM server 68 selects the storage tier for a given content item based on the investigation case (or cases) with which this item is associated. The structure and operation of ILM server 68 is explained in greater detail below.

In the present context, the definitions or rules that specify which storage tier or tiers are to be used for storing the various content items are referred to as an ILM policy. In the disclosed techniques, the content items are associated with investigation cases, and the ILM policy depends on this association. In other words, the ILM server analyzes the state of a given investigation case, and then selects and applies a suitable ILM policy for the items associated with this case based on the state of the case. Thus, the terms "selecting a storage tier" and "selecting an ILM policy" are sometimes used interchangeably herein.

Monitoring center 20 comprises an operator terminal 56, using which an operator 60 is able to retrieve and analyze the content stored in storage system 40. Typically, the operator terminal comprises suitable input and output devices for presenting the content to the operator and for controlling the monitoring center by the operator. Typically, the operator is able to view and analyze the metadata, as well.

In the present embodiment, DB 64 holds a list of investigation cases. For each investigation case, DB 64 holds references to the current storage locations (in system 40) of all raw data elements that are associated with the case stored, as well as the metadata relating to the case. Typically, a raw content element may belong to only one case. Thus, for example, if a certain intercepted call belongs to multiple cases, the call is duplicated and its content associated separately with the different cases.

This technique enables each case to be analyzed separately and allow applying case-based access rights. In these embodiments, an investigator working on one case is usually not permitted to have access to information gathered and analyzed in another case. If a call belongs to two cases, the call will typically be handled totally separately within the context of each case, e.g., with separate transcriptions, annotations and analysis results.

Thus, DB 64 typically holds, for each case, a list of references to the metadata records associated with the case. A given metadata record typically holds a list of references to the current storage locations (in system 40) of the raw content elements.

Typically, when the ILM server moves content items from one storage tier to another, the metadata associated with these content items is not moved. The ILM server updates the metadata to reflect the new storage locations of the content items in the new storage tier. In a typical embodiment, all content items of a given case are moved in a single transaction. The transaction can be rolled back in case of failure.

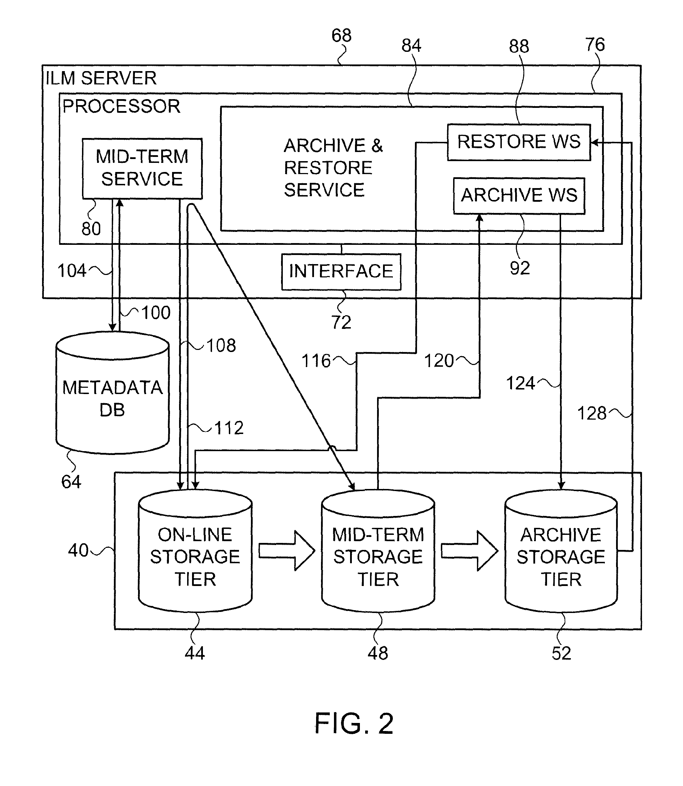

Fig. 2 is a block diagram that schematically illustrates ILM server 68 and its interaction with other elements of monitoring center 20, in accordance with an embodiment of the present disclosure. ILM server 68 comprises an interface 72 for communicating with other elements of monitoring center 20, e.g., with DB 64 and with storage system 40. The ILM server further comprises a processor 76 that carries out the methods described herein. In the present example, processor 76 runs several software modules, namely a mid-term service 80 and an archive/restore service 84. Service 84 comprises a restore Work Station (WS) 88 and an archive WS 92 that are operated by operator 60.

Mid-term service 80 is responsible for moving content items between on-line storage tier 44 and mid-term storage tier 58. In a typical flow, based on the status of a given case the mid-term service queries the metadata of the calls related to this case in DB 64, as illustrated by an arrow 100. Based on the metadata (e.g., based on the investigation case with which the call is associated), the mid-term service may decide to move the content of the call from on-line storage tier 44 to mid-term storage tier 48. After copying the content item from tier 44 to tier 48 (illustrated by an arrow 112), the mid-term service deletes the content item from tier 44 (illustrated by an arrow 108), and updates the path of in the metadata stored in DB 64 (illustrated by an arrow 104) to reflect the new storage location. Typically, the entire process of moving content items between storage tiers is transparent to operator 60.

A content item is typically deleted from a given storage tier only after it is safely copied to its new location, to ensure data integrity. In these procedures (sometimes referred to as "make before break"), the duplicated content is first verified to be stored successfully in the new location. Only afterwards, as a complete transaction (meaning that all the content items were copied successfully), the old information is deleted. If, for any reason, the copy process is interrupted or the metadata update fails, then the process is rolled-back: All the copied information is deleted and the content is left in the original storage location.

Although the figure shows data flow from the on-line tier to the mid-term tier, data flow in the opposite direction may also be allowed. In other words, the process above can be used to move content items from the mid-term storage tier to the on-line storage tier. This decision may be based, for example, on the investigation case or cases with which the content is associated.

Archive/restore service 84 is responsible for moving content items between archive storage tier 52 and the other storage tiers. The example of Fig. 2 shows data flow from the mid-term storage tier to the archive storage tier. Alternatively, however, service 84 may move data from on-line storage tier to the archive storage tier, as well as from the archive storage tier to any of the other storage tiers.

In the example flow of Fig. 2, archive WS 92 queries the metadata of a certain call in DB 64. Based on the metadata (e.g., based on the investigation case with which the call is associated), the ILM server may decide to move the content of the call from mid-term storage tier 48 to archive storage tier 52. After copying the content item from tier 48 to tier 52 (illustrated by arrows 120 and 124), the ILM server deletes the content item from tier 48 and updates the path of in the metadata stored in DB 64. In some embodiments, WS 92 archives a content item in tier 52 by copying the content item to a local memory in server 68, producing an image to be written to archive tier 52, and then writing the image from server 68 to tier 52. In some scenarios, operator 60 may control this process, for example by returning data from WORM storage (e.g., CD, DVD or external storage).

In some embodiments, restore WS 88 restores content items from tier 52 to tiers 44 and/or 48. In the present example, restore WS 88 queries the metadata of a certain call in DB 64. Based on the metadata (e.g., based on the investigation case with which the call is associated), the ILM server may decide to restore the content of the call from archive storage tier 52 to on-line storage tier 44. After copying the content item from tier 52 to tier 44 (illustrated by arrows 128 and 116), the ILM server deletes the content item from tier 52 (if applicable) and updates the path of in the metadata stored in DB 64. In some embodiments, WS 88 restores a content item from tier 52 by copying the image of the content item to a local memory in the ILM server, and restoring the content from server 68 to tier 44.

The monitoring center and ILM server configurations of Figs. 1 and 2 are example configurations, which are chosen purely for the sake of conceptual clarity. In alternative embodiments, any other suitable configurations can be used. The monitoring center and ILM server elements may be implemented using hardware, software or using a combination of hardware and software elements. Typically, ILM server 68 (and in particular processor 84) comprises a general-purpose computer, which is programmed in software to carry out the functions described herein. The software may be downloaded to the computer in electronic form, over a network, for example, or it may, alternatively or additionally, be provided and/or stored on non-transitory tangible media, such as magnetic, optical, or electronic memory.

### STORAGE TIER SELECTION BASED ON ASSOCIATION WITH INVESTIGATION CASES

In some embodiments, the information in monitoring center 20 is organized and managed in the context of investigation cases. A given investigation case may relate to a certain individual or group of individuals, to an event or group of events, to a certain geographical location, for example. Alternatively, an investigation case may be defined in any other suitable manner.

A given investigation case is typically associated with multiple calls, and therefore with multiple content items in storage system 40. For example, an investigation case that concerns a certain suspect individual may be associated, for example, with the telephone calls conducted by this individual, the telephone calls conducted from the individual's phone, the telephone calls in which the individual's name was mentioned. Alternatively, any other suitable association criteria can be defined and used. The association between a given call (and thus given content) and a given investigation case may be defined manually by operator 60 or automatically. Generally, a given call (and therefore given content) may be associated with one or more investigation cases.

In some embodiments, ILM server 68 decides in which storage tier to store given content (i.e., to select an ILM policy for the content) based on the investigation case (or cases) with which the content is associated. Typically, the associations between content and investigation cases are stored in DB 64, and the ILM server queries this information and moves content items from one storage tier to another based on the queried associations. Newly-intercepted content will typically be stored in on-line storage tier 44, and later moved to other storage tiers as necessary. In other words, the selection of storage tier may depend on the timing profiles according to which the content items were accessed.

ILM server 68 may apply any suitable criteria for selecting a storage tier for a given content item based on the investigation cases with which the item is associated. For example, a given investigation case typically has a given activity status at a given time. For example, an investigation case may be defined as active or inactive (closed). In some embodiments, ILM server 68 selects the storage tier for a given content item based on the activity statuses of the investigation cases with which the item is associated.

In an example embodiment, server 68 stores all the content items that are associated with an active investigation case in on-line storage tier 44 or in mid-term storage tier 48. The content items that are associated with inactive investigation cases are stored in the archive storage tier 52. When the activity status of a given investigation case changes, ILM server 68 typically moves the content items of this case between the storage tiers to match the new activity status. For example, when operator 60 closes a case, ILM server 68 typically moves the content associated with this case to the archive storage tier. When operator 60 re-opens a case, the ILM server typically restores the content items associated with this case from the archive tier to the mid-term or on-line tier.

Note that this sort of policy is distinctly different from selecting the storage tier based on the activity status of the content items themselves (e.g., based on when the content was most recently accessed). For example, old or rarely-accessed content may be associated with an active investigation case, and therefore stored in the mid-term or even on-line tier. A new or frequently-accessed content item may not be associated with any active cases, and therefore be archived in the archive tier. By selecting the storage tiers for the content items based on the associated investigation cases, ILM server 68 is able to optimize the usage of storage system 40 to the actual relevance of the content. As a result, both access time and system cost are optimized.

When a given content item is associated with two or more investigation cases, the ILM server may apply any suitable criteria for resolving possible contradictions. For example, if at least one of the cases associated with a given content item is active, the ILM server may treat this item as associated with an active case. If all the cases associated with a given content item are inactive, the ILM server will treat this item as associated with an inactive case. Alternatively, any other suitable policy can be used.

In some embodiments, a given investigation case may have one or more sub-cases. The given investigation case is referred to as a parent case in this context. Each sub-case, as well as the parent case, may be associated with a certain respective set of content items. The ILM server may select the storage tier for a given content item based on the associated case, and/or based on parent and sub-cases of this case.

In some embodiments, the investigation cases are assigned respective priorities. The priorities can be used, for example, for allocating monitoring center resources to the various cases. In these embodiments, ILM server 68 may select a storage tier for a given content item based on the priority (or priorities) of the investigation case (or cases) associated with this item. Typically, content associated with high-priority cases will be given precedence over content associated with low-priority cases in access to resources.

Consider, for example, a configuration in which the size of on-line storage tier 44 is limited. When competing for storage space in on-line tier 44, content that is associated with a high-priority case may be given precedence over content that is associated with a low-priority case. Alternatively, the ILM server may use the priorities of the investigation cases in any other way to select storage tiers for content items.

In some embodiments, ILM server 68 applies the investigation-related criteria described above in combination with other criteria. For example, the on-line storage tier may be used for storing content items associated with active cases as well as content items intercepted in the last N days. Alternatively, any other suitable criteria can be used.

Typically, the storage locations of the different content items are transparent to operator 60, and are managed automatically by ILM server 68.

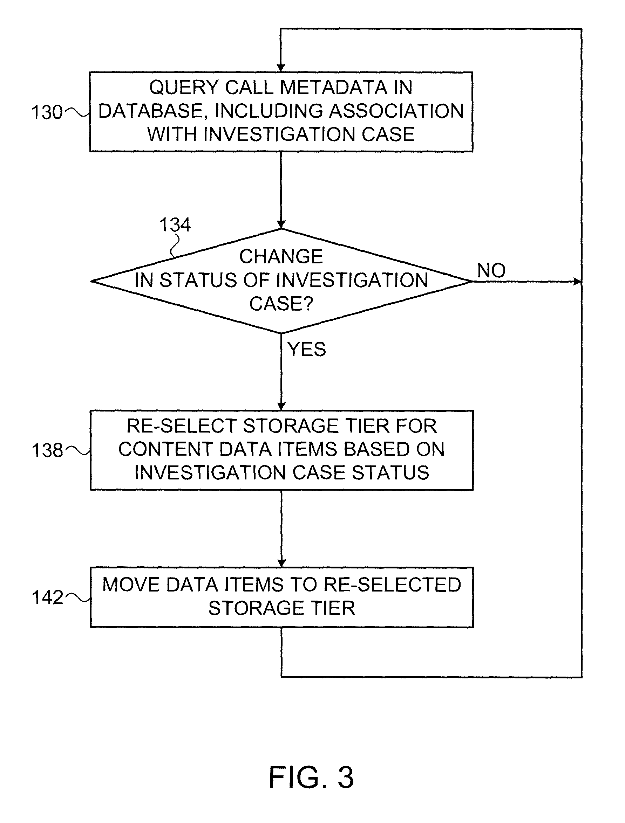

Fig. 3 is a flow chart that schematically illustrates a method for ILM, in accordance with an embodiment of the present disclosure. The method begins with ILM server 68 querying DB 64 for the metadata of a certain call, at a database querying step 130. In particular, the ILM server obtains the investigation case with which the call content is associated.

The ILM server checks whether the activity status of the investigation case has changed, at a change checking step 134. In other words, the ILM server checks whether the storage tier used for storing the content of the call matches the status of the investigation case. If the storage location matches the status, the method loops back to step 130 above.

Otherwise, the ILM server re-selects the storage tier for storing the content in question, at a reselection step 138. The ILM server moves the content items to the re-selected storage tier, at a content moving step 142. The method then loops back to step 130 above.

Although the embodiments described herein refer mainly to storage in multiple storage tiers having different respective access times, the disclosed techniques can also be used with storage tiers that differ from one another in other performance levels.

The disclosed techniques can be used in any application that involves investigation cases, such as like Anti-Money Laundering (AML) systems at Financial Investigation (FI) units, fraud investigation systems (e.g., systems used also by telecom operators, insurance companies and other organizations), or any other suitable application. When using the disclosed techniques in such applications, the data is organized by investigation cases, including both well-structured data such as CDRs and metadata, and non-structured content such as phone calls, e-mail messages, transcriptions and call summaries. ILM is applied to all of these data types according to their association with investigation cases, e.g., based on the case activity status.

It will thus be appreciated that the embodiments described above are cited by way of example, and that the present disclosure is not limited to what has been particularly shown and described hereinabove. Rather, the scope of the present disclosure includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method for Information Lifecycle Management (ILM), comprising:
analyzing a state of an investigation case;
selecting, based on the analyzed state, an ILM policy for applying to items of data associated with the investigation case; and
storing the items of data in a storage system having multiple storage tiers having different, respective performance levels, in accordance with the ILM policy.

2. The method according to claim 1, wherein selecting the ILM policy comprises choosing a respective storage tier for storing each item of data.

3. The method according to claim 2, wherein selecting the ILM policy comprises identifying an activity status of the investigation case, and choosing the storage tier depending on the activity status.

4. The method according to claim 1, wherein the performance levels of the multiple storage tiers comprise different, respective access times.

5. The method according to claim 1, wherein the items comprise content that is derived from communication sessions conducted over a communication network and metadata associated with the content.

6. The method according to claim 5, wherein the metadata comprises references to a current storage location of the associated content in the storage system.

7. The method according to claim 5, wherein the items comprise additional items of data from an external source separate from the communication network.

8. The method according to claim 1, wherein storing the items in accordance with the ILM policy comprises storing the items in a first storage tier having a first performance level when the investigation case is active, and storing the items in a second storage tier having a second performance level, lower than the first performance level, when the investigation case is inactive.

9. The method according to claim 1, wherein storing the items in accordance with the ILM policy comprises detecting a change in the state of the investigation case, and moving the items from a first storage tier to a second storage tier in response to the change.

10. The method according to claim 9, wherein the items comprise content and metadata associated with the content, and wherein moving the items comprises moving only the content and not the metadata of the items, and updating the metadata of the items to reflect a current storage location of the items in the second storage tier.

11. The method according to claim 1, wherein the investigation case is one of multiple investigation cases that are assigned respective priorities, and wherein storing the items in accordance with the ILM policy comprises choosing a storage tier for storing the items depending on a priority assigned to the investigation case.

12. The method according to claim 1, wherein selecting the ILM policy comprises choosing a storage tier for storing the items depending on a parent case or on a sub-case of the investigation case.

13. The method according to claim 1, wherein selecting the ILM policy comprises selecting a storage tier for storing the items based on timing profiles according to which the data items associated with the investigation case were accessed.

14. The method according to claim 1, wherein storing the items in accordance with the ILM policy comprises copying content of all the items associated with the investigation case from a first storage location to a second storage location in a single transaction, updating metadata associated with the items following the transaction to indicate the second storage location, and, after updating the metadata, deleting the content from the first storage location.

15. The method according to claim 14, and comprising rolling back the transaction upon failing to successfully complete the transaction or to update the metadata.
